# EUROPEAN PATENT SPECIFICATION

(11) **EP 3 116 723 B1**
(45) Date of publication and mention of the grant of the patent: **01.05.2019**
(21) Application number: 15719870.6
(22) Date of filing: 10.03.2015
(51) Int. Cl.: B60C 9/00, B60C 9/20, B60C 9/22, D02G 3/48

(54) **A PNEUMATIC RADIAL TIRE WITH HYBRID CORD REINFORCEMENT**
RADIALLUFTREIFEN MIT HYBRIDCORDVERSTÄRKUNG
PNEU RADIAL A BANDAGE PNEUMATIQUE A RENFORT DE CÂBLES HYBRIDES

(30) Priority: 12.03.2014 TR 201402944
(43) Date of publication of application: 18.01.2017
(73) Proprietor: Kordsa Teknik Tekstil A.S, Izmit / Kocaeli (TR)
(72) Inventor: AKSOY, Kürsat, 41310 Kocaeli (TR); MERTOL, Bekir Anil, 41310 Kocaeli (TR); ILGUN, Ahmet Burak, 41310 Kocaeli (TR); FIDAN, Sadettin, 30827 Garbsen (DE)
(74) Representative: Dericioglu Kurt, Ekin
(86) International application number: PCT/TR2015/000104
(87) International publication number: WO 2015/137901

(56) References cited:
- DE-A1-102007 025 490
- DE-A1-102012 105 766

## Description

### Field of the Invention

The present invention relates to the application of hybrid cords comprising polyethylene terephthalate (PET) and nylon 6.6 multifilament yarns as cap ply reinforcement material in pneumatic radial tires which have high speed durability and low flatspot feature.

### Background of the Invention

It is known that reinforcement materials that are wound spirally with a small angle with the equatorial plane on the belt package especially improve the high speed performance in radial tires. Using polymeric (nylon 6.6, PET, aramide/nylon etc.) cords as cap ply reinforcement as strips has been applied for many years by several tire companies in order to improve high speed durability and handling performance in pneumatic radial tires. The said cord strips are obtained by cutting calendered (rubberized) cord fabric in strips or rubberizing parallel single cords in a certain width during extrusion process.

The purpose of using the cap ply reinforcement is to increase the high speed durability of the tire by avoiding belt layer separation caused by the centrifugal force occurring in the belt package at high speeds. Especially the intensity of the resistance shown by the tire against belt edge separations is highly important for high speed durability.

When the nylon is used as cap ply reinforcement material, there are two important disadvantages. First one is the obligation to be used as more than one layer due to its low modulus. And the second one is the temporary geometric deformation (flatspot) caused as a result of cooling the tire heated at high speed upon parking, since the glass transition temperature (Tg) of the polymer is low.

United States Patent document no US7584774, an application known in the state of the art, discloses the use of high modulus polyethylene terephthalate cord as cap ply reinforcement material in order to increase the high speed durability of tire and decrease the temporary geometric deformation (flatspot) problem. In this embodiment wherein the tangent modulus of the cap ply cord is suggested being higher than 2.5mN/dtex.% at 160 °C under 29.4N, there is a risk of the cords cutting the coating rubber during vulcanization process. For this reason it is suggested that the process expansion will be maximum 2%. Furthermore, the fatigue failure risk of polyethylene terephthalate cord, which has higher modulus than nylon 6.6 cord, under cyclic deformation is higher than nylon 6.6 cord.

German Patent documents no DE102012105766 and DE102007025490, known in the state of the art, disclose a strength support layer for elastomeric products and a pneumatic vehicle tyre which contains at least one strength support layer.

In order to increase the high speed durability of the tire, the cap ply reinforcement cords located on the belt package should resist the tire growth that can occur from the centrifugal force at high speed.

The said tire growth resistance formed in the cap ply reinforcement cords is comprised the total of
- stress (cold residual tension) occurring in the cap ply reinforcement cords after vulcanization process,
- thermal shrink force generated due to increasing temperature of the belt zone because of high speed,
- and the cord modulus at the said temperature.

### Summary of the Invention

The objective of the present invention is to provide a pneumatic radial tire comprising cap ply reinforcement.

Another objective of the present invention is to provide a pneumatic radial tire wherein the hybrid cords in cap ply reinforcement layer are comprised of polyethylene terephthalate (PET) and nylon 6.6 multifilament yarns.

A further objective of the present invention is to provide a radial tire reinforced with hybrid cord wherein the pressure on the belt **cord** is increased at high speed and temperature by increasing the thermal shrinkage force.

### Detailed Description of the Invention

Pneumatic radial tire reinforced with hybrid cord developed to fulfill the objectives of the present invention is illustrated in the accompanying figures, in which:

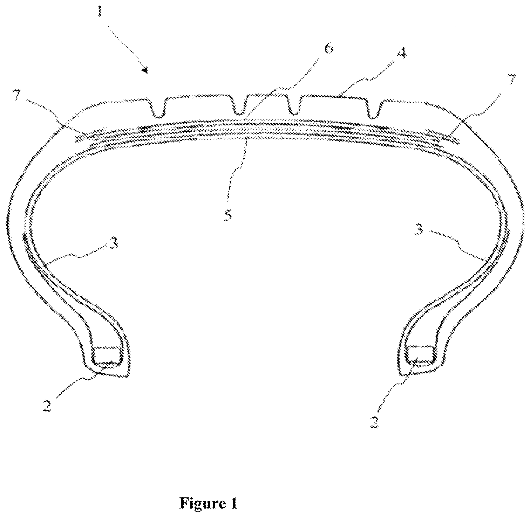

Figure 1 is the front sectional view of the inventive radial tire.

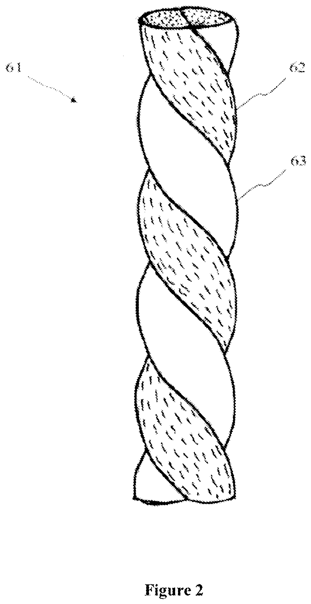

Figure 2 is the perspective view of hybrid cord used as cap ply reinforcement layer

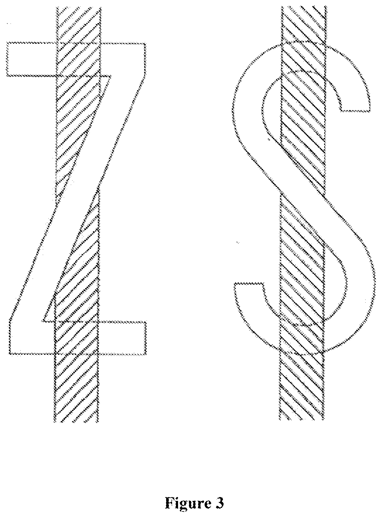

Figure 3 is the definitions of Z and S twist directions of hybrid cords present in the cap ply reinforcement layer.

The components shown in the figures are each given reference numbers as follows:
1. A pneumatic radial tire reinforced with hybrid cord
2. Tire bead ring
3. Carcass
4. Tread
5. Belt
6. Cap ply reinforcement layer
   61. Hybrid cord
   62. PET multifilament yarn
   63. Nylon 6.6 multifilament yarn
7. Belt edge reinforcement layer

The inventive pneumatic radial tire (1) essentially comprises at least one tread (4) forming the outermost layer of the tire (1) and at least one belt (5) on the carcass (3) forming the inner layer of the tire (1). The tire (1) is reinforced with at least one cap ply reinforcement layer (6) which is obtained by using hybrid cords (61) which are formed by twisting polyethylene terephthalate (PET) (62) and nylon 6.6 multifilament yarns (63) and the thermal shrinkage force and modulus of which are increased by applying heat-set process; therefore the high speed durability of the tire (1) is increased. The cap ply reinforcement layer (6) is between the tread (4) forming the outer layer of the tire (1) and the belt (5) formed of steel material. The cap ply reinforcement layer (6) is wound spirally on the belt (5) as strip such that it will for an angle between 0 and 5 degrees with the equatorial plane.

The heat-set process, which is a thermal process, comprises stretching hybrid cord (61) minimum 1% at 180-240°C. This process increases the tension value of the cord (61) corresponding to 3% level to minimum 8mN/dtex at 25°C, and it increases the thermal shrinkage force above 2mN/dtex at 177°C.

In heat-set process, the hybrid cords (61) are also provided with adhesive property with the rubber in the tire (1) by applying resorcinol formaldehyde latex (RFL) dip solution.

In the preferred embodiment of the invention, there is at least one belt edge reinforcement layer (7) wound on each side of the cap ply reinforcement layer (6) in order to support the cap ply reinforcement layer (6). Cap ply reinforcement layer (6) having hybrid cords (61) with increased thermal shrinkage force and wound on the belt (6) and the belt edge reinforcement layer (7) enable to increase high speed durability by providing resistance against the increase in diameter of the tire (1).

The hybrid cords (61) forming the cap ply reinforcement layer (6) are obtained by twisting pre-twisted PET (62) and nylon (63) yarns in Z or S direction such that they will be in reverse direction of the pre-twisting direction. The twisting level varies between 100 and 800 twists/meter, preferably 200 to 400 twists/meter. In the preferred embodiment of the invention, the twisting level of the hybrid cords (61) is equal to pre-twisting level of yarn or it has maximum10% difference.

The width of the cap ply reinforcement layer (6) should be equal to the width of the belt (5) or it should be wider than the belt.

The width of the cap ply reinforcement layer (6) as strip which is used as wound around the belt (5) varies between 5mm and 30mm, preferably 8mm to 15mm. The number of cords (61) provided in 10mm width of the cap ply reinforcement layer (6) can vary between 5 and 20.

The reinforcement layer (6) can exist in the tire (1) as coated with rubber or not coated with rubber. The linear densities* of the hybrid cords (61) in the cap ply reinforcement layer (6) are between 500 and 6000 dtex. In the preferred embodiment of the invention, the linear density of nylon 6.6 multifilament yarns (63) is smaller than the linear density of the PET multifilament yarns (62). In one embodiment of the invention, the linear density of nylon 6.6 yarns (63) forming the hybrid cord (61) is 1400 dtex, while the linear density of the PET yarns (62) is 1440 dtex.

*The linear density is the weight of 10000 meters length of a yarn in unit of gram, and its unit value is dtex.

## Claims

1. A pneumatic tire with a hybrid cord reinforcement **comprising**
- a tread (4) forming the outermost layer of the tire (1),
- at least one belt (5) on the carcass (3) forming the inner layer of the tire (1), and
- at least one cap ply reinforcement layer (6) obtained from hybrid cords (61) which are formed by twisting pre-twisted polyethylene terephthalate (PET) multifilament yarns (62) and nylon (63) yarns in Z or S direction such that they will be in reverse direction of the pre-twisting direction,
- wherein the twisting level of the hybrid cords (61) is equal to the pre-twisting level of the yarn or it has maximum 10% difference,
- the reinforcement layer (6) is wound spirally (as strip) such that it will make an angle of 0 to 5°with the equatorial plane on the belt (5)
- **and characterized in that** the thermal shrinkage force and modulus of the hybrid cord (61) are increased by stretching it at a minimum of 1% at 180-240°C, and **in that** the reinforcement layer (61) is obtained by using said hybrid cords (61), the tensile force LASE value of which is at minimum 8mN/dtex at 3% elongation at 25°C according to the ASTM D855 test method, and the thermal shrinkage force of which is at minimum 2mN/dtex at 177°C according to the ASTM D855 test method.

2. A pneumatic radial tire with hybrid cord reinforcement according to any one of the preceding claims, **characterized by** at least one belt edge reinforcement layer (7) which is provided on both sides of the cap ply reinforcement layer (6), and which enables to increase high speed durability by providing resistance against the increase in tire diameter.

3. A pneumatic radial tire with hybrid cord reinforcement according to any one of the preceding claims, **characterized by** at least one cap ply reinforcement layer (6) which has hybrid cords (61) that are formed by twisting polyethylene terephthalate (PET) multifilament yarns (62) and nylon 6.6 multifilament yarns (63) in Z or S direction in range of 100 to 800 twists/meter.

4. A pneumatic radial tire with hybrid cord reinforcement according to claim 3, **characterized by** at least one cap ply reinforcement layer (6) which has hybrid cords (61) that are formed by twisting polyethylene terephthalate (PET) multifilament yarns (62) and nylon 6.6 multifilament yarns (63) preferably in twisting level of 200 to 400 twists/meter.

5. A pneumatic radial tire with hybrid cord reinforcement according to any one of the preceding claims, **characterized by** at least one cap ply reinforcement layer (6) the width of which is equal to the width of the belt (5) or wider than the width of the belt.

6. A pneumatic radial tire with hybrid cord reinforcement according to claim 5, **characterized by** at least one cap ply reinforcement layer (6) the strip width value of which is between 5mm and 30mm.

7. A pneumatic radial tire with hybrid cord reinforcement according to claim 6, **characterized by** at least one cap ply reinforcement layer (6) the strip width value of which is preferably between 8mm and 15mm.

8. A pneumatic radial tire with hybrid cord reinforcement according to any one of the claims 5 to 7, **characterized by** at least one cap ply reinforcement layer (6) wherein the number of hybrid cords (61) in width of 10mm varies between 5 and 20.

9. A pneumatic radial tire with hybrid cord reinforcement according to any one of the preceding claims, **characterized by** at least one cap ply reinforcement layer (6) which has hybrid cords (61) the linear densities of which are between 500 and 6000 dtex.

10. A pneumatic radial tire with hybrid cord reinforcement according to claim 9, **characterized by** at least one cap ply reinforcement layer (6) which has hybrid cords wherein the linear density of nylon 6.6 multifilament yarns (63) is smaller than the linear density of the PET multifilament yarns (62).

## Patentansprüche

1. Pneumatischer Reifen mit einer Hybridkord-Verstärkung, **umfassend**
- eine Lauffläche (4), die die äußerste Schicht des Reifens (1) bildet,
- mindestens einen Gürtel (5) an der Karkasse (3), der die Innenschicht des Reifens (1) bildet,
und
mindestens eine Kappenverstärkungsschicht (6), die aus Hybridkordeln (61) erhalten wird, die durch Verdrehen von vorgedrehten Polyethylenterephthalat (PET)-Multifilamentgarnen (62) und Nylon (63)-Garnen in Z- oder S-Richtung gebildet werden, so dass sie in umgekehrter Richtung der Vorverdrehrichtung verlaufen,
wobei der Verdrehungsgrad des Hybridkordes (61) gleich dem Vorverdrehungsgrad des Garns ist oder maximal 10% Differenz hat, die Verstärkungsschicht (6) spiralförmig (als Streifen) gewickelt ist, so dass sie einen Winkel von 0 bis 5° mit der äquatorialen Ebene auf dem Gürtel (5) ausmacht.
- **und dadurch gekennzeichnet, dass** die thermische Schrumpfungskraft und der thermische Schrumpfmodul des Hybridkordes (61) durch Dehnung bei mindestens 1% bei 180-240°C erhöht werden, und dass die Verstärkungsschicht (61) unter Verwendung der Hybridkord (61) erhalten wird, deren Zugkraft LASE-Wert bei 3% Dehnung bei 25°C nach dem Prüfverfahren ASTM D855 mindestens 8mN/dtex beträgt und deren thermische Schrumpfungskraft bei 177°C mindestens 2mN/dtex nach dem Prüfverfahren ASTM D855 beträgt.

2. Pneumatischer Radialreifen mit Hybridkord-Verstärkung nach einem der vorstehenden Ansprüche, **gekennzeichnet durch** mindestens eine Gurtkantenverstärkungsschicht (7), die auf beiden Seiten der Kappenverstärkungsschicht (6) vorgesehen ist und die es ermöglicht, die Haltbarkeit bei hohen Geschwindigkeiten zu erhöhen, indem sie Widerstand gegen die Zunahme des Reifendurchmessers bietet.

3. Pneumatischer Radialreifen mit Hybridkord-Verstärkung nach einem der vorstehenden Ansprüche, **gekennzeichnet durch** mindestens eine Kappenverstärkungsschicht (6), die Hybridkordeln (61) aufweist, die durch Verdrehen von Polyethylenterephthalat (PET)-Multifilamentgarnen (62) und Nylon 6.6-Multifilamentgarnen (63) in Z- oder S-Richtung im Bereich von 100 bis 800 Drehungen/Meter gebildet sind.

4. Pneumatischer Radialreifen mit Hybridkord-Verstärkung nach Anspruch 3, **gekennzeichnet durch** mindestens eine Kappenverstärkungsschicht (6), die Hybridkordeln (61) aufweist, die durch Verzwirnen von Polyethylenterephthalat (PET)-Multifilamentgarnen (62) und Nylon 6.6-Multifilamentgarnen (63) gebildet sind, vorzugsweise im Verdrehungsgrad von 200 bis 400 Drehungen/Meter.

5. Pneumatischer Radialreifen mit Hybridkord-Verstärkung nach einem der vorstehenden Ansprüche, **gekennzeichnet durch** mindestens eine Kappenverstärkungsschicht (6) aus Deckschichten, deren Breite gleich der Breite des Gürtels (5) oder größer als die Breite des Gürtels ist.

6. Pneumatischer Radialreifen mit Hybridkord-Verstärkung nach Anspruch 5, **gekennzeichnet durch** mindestens eine Kappenverstärkungsschicht (6), deren Bandbreitenwert zwischen 5mm und 30mm liegt.

7. Pneumatischer Radialreifen mit Hybridkord-Verstärkung nach Anspruch 6, **gekennzeichnet durch** mindestens eine Kappenverstärkungsschicht (6), deren Bandbreitenwert vorzugsweise zwischen 8 mm und 15 mm liegt.

8. Pneumatischer Radialreifen mit Hybridcord-Verstärkung nach einem der Ansprüche 5 bis 7, **gekennzeichnet durch** mindestens eine Kappenverstärkungsschicht (6), wobei die Anzahl die Hybridkordeln (61) in einer Breite von 10 mm zwischen 5 und 20 variiert.

9. Pneumatischer Radialreifen mit Hybridkord-Verstärkung nach einem der vorstehenden Ansprüche, **gekennzeichnet durch** mindestens eine Kappenverstärkungsschicht (6), die Hybridkordeln (61) aufweist, deren lineare Dichten zwischen 500 und 6000 dtex liegen.

10. Pneumatischer Radialreifen mit Hybridkord-Verstärkung nach Anspruch 9, **gekennzeichnet durch** mindestens eine Kappenverstärkungsschicht (6), die Hybridkordeln aufweist, wobei die lineare Dichte von Nylon 6.6 Multifilamentgarnen (63) kleiner ist als die lineare Dichte der PET Multifilamentgarne (62).

## Revendications

1. Pneumatique avec un renforcement à cordon hybride **comprenant**
- une bande de roulement (4) formant la couche extérieure du pneu (1),
- au moins une ceinture (5) sur la carcasse (3) formant la couche intérieure du pneu (1), et
- au moins une couche de renforcement de nappe de sommet (6) obtenue à partir des cordons hybrides (61) qui se forment par torsion fils multifilaments (62) de polyéthylène téréphtalate (PET) et fils de nylon (63) pré-tordus dans le sens Z ou S de manière à ce qu'ils soient dans le sens inverse du sens de pré-torsion,
dans lequel le niveau de torsion des cordons hybrides (61) est égal au niveau de pré-torsion du fil ou il a une différence maximale de 10%, la couche de renforcement (6) est enroulée en spirale (sous forme de bande) de telle sorte qu'elle fasse un angle de 0 à 5° avec le plan équatorial sur la ceinture (5)
- et **caractérisé en ce que** la force de retrait thermique et le module du cordon hybride (61) sont augmentés en l'étirant à un minimum de 1% à 180-240°C, et **en ce que** la couche de renforcement (61) est obtenue en utilisant lesdits cordons hybrides (61) dont la valeur de force de traction LASE est d'au moins 8mN/dtex à 3% d'allongement à 25°C selon le procédé de test ASTM D855, et dont la force de retrait thermique est d'au moins 2mN/dtex à 177°C selon la méthode d'essai ASTM D855.

2. Pneumatique radial avec renforcement de cordon hybride selon l'une quelconque des revendications précédentes, **caractérisé par** au moins une couche de renforcement de bord de ceinture (7) qui est prévue des deux côtés de la couche de renforcement de nappe de sommet (6), et qui permet d'augmenter la durabilité à grande vitesse en offrant une résistance à l'augmentation du diamètre du pneu.

3. Pneumatique radial avec renforcement de cordon hybride selon l'une quelconque des revendications précédentes, **caractérisé par** au moins une couche de renforcement de nappe de sommet (6) qui a des cordons hybrides (61) qui se forment par torsion fils multifilaments (62) de polyéthylène téréphtalate (PET) et fils multifilaments (63) en nylon 6.6 dans le sens Z ou S dans une plage de 100 à 800 tours/mètre.

4. Pneumatique radial avec renforcement de cordon hybride selon la revendication 3, **caractérisé par** au moins une couche de renforcement de nappe de sommet (6) qui présente des cordons hybrides (61) qui se forment par torsion fils multifilaments (62) de polyéthylène téréphtalate (PET) et fils multifilaments (63) en nylon 6.6 de préférence à un niveau de torsion de 200 à 400 tours/mètre.

5. Pneumatique radial avec renforcement de cordon hybride selon l'une quelconque des revendications précédentes, **caractérisé par** au moins une couche de renforcement de nappe de sommet (6) dont la largeur est égale à la largeur de la ceinture (5) ou plus large que la largeur de la ceinture.

6. Pneumatique radial avec renforcement de cordon hybride selon la revendication 5, **caractérisé par** au moins une couche de renforcement de nappe de sommet (6) dont la largeur de bande est comprise entre 5 mm et 30 mm.

7. Pneumatique radial avec renforcement de cordon hybride selon la revendication 6, **caractérisé par** au moins une couche de renforcement de nappe de sommet (6) dont la largeur de bande est de préférence comprise entre 8 mm et 15 mm.

8. Pneumatique radial avec renforcement de cordon hybride selon l'une quelconque des revendications 5 à 7, **caractérisé par** au moins une couche de renforcement de nappe de sommet (6) dans laquelle le nombre de cordons hybrides (61) d'une largeur de 10 mm varie entre 5 et 20.

9. Pneumatique radial avec renforcement de cordon hybride selon l'une quelconque des revendications précédentes, **caractérisé par** au moins une couche de renforcement de nappe de sommet (6) qui présente des cordons hybrides (61) dont les densités linéaires sont comprises entre 500 et 6000 dtex.

10. Pneumatique radial avec renforcement de cordon hybride selon la revendication 9, **caractérisé par** au moins une couche de renforcement de nappe de sommet (6) qui présente des cordons hybrides dans laquelle la densité linéaire des fils multifilaments (63) en nylon 6.6 est inférieure à la densité linéaire des fils multifilaments en PET (62).
